# EUROPEAN PATENT APPLICATION

(11) **EP 1 965 171 A2**
(43) Date of publication of application: **03.09.2008**
(21) Application number: 08001921.9
(22) Date of filing: 01.02.2008
(51) Int. Cl.: G01C 21/32

(54) **Map information updating system**

(30) Priority: 27.02.2007 JP 2007047900
(71) Applicant: Aisin AW Co., Ltd., Fujii-cho Anjo-shi, Aichi 444-1192 (JP)
(72) Inventor: Minami, Toshiaki, Okazaki-shi Aichi 444-8564 (JP)
(74) Representative: Kramer - Barske - Schmidtchen

(57) **Abstract**

When a CPU of a map information distribution center receives travel history data together with an update request for navigation map information, based on the newest version of map information contained in update map information, the CPU retrieves routes that correspond to the "departure point" and the "destination point" of each of the routes traveled in the past that are contained in the received travel history data. A travel information comparison table is produced based on the route information for each of the retrieved routes. The CPU then compares the "post-update map retrieval" and the "pre-update map retrieval" of the travel information comparison table for each entry, selects several cases starting from the superior cases in order of most improved effect, produces "display data" that displays the results, and transmits the results to the navigation apparatus.

## Description

### BACKGROUND OF THE INVENTION

### 1. Field of the Invention

The present invention relates to a map information updating system.

### 2. Description of the Related Art

Conventionally, various map information updating systems have been proposed that provide notification about the results of comparisons of map information before and after being updated.

For example, a map information updating system is known that is structured such that the portion of the map data that is the object of updating is updated by using update information that includes information for specifying the update object in the map data and update map data, which have been associated, and then stored. In the case in which the portion that has been updated by using the update map data is included in the map that is to be displayed, the display state of at least one among an updated portion and a non-updated portion of map data is changed so as to be visually recognizable by distinguishing the updated portion and the non-updated portion, and then displayed (refer, for example, to Japanese Patent Application No. JP-A-2005-91225, paragraphs (0030) to (0040) and FIG 3).
In addition, according to such a structure, the user that views this displayed map can perceptually recognize which portion is the updated portion.

### SUMMARY OF THE INVENTION

However, in the map information updating system that is disclosed in Japanese Patent Application No. JP-A-2005-91225, described above, although it is easy to recognize which portion of the displayed map is the updated portion, there is a problem in that it is not possible to recognize easily what kind of benefits are provided to the user due to this updating.

Thus, in order to solve the problem described above, it is an object of the present invention to provide a map information updating system that enables easy recognition of what benefits are provided to a user by the updating of map information that is stored in a navigation system.

In the map information updating system according to a first aspect of the present invention, the routes that have been retrieved by using map information that is stored in the navigation apparatus and the routes that have been retrieved by using the post-update map information that has updated this map information are compared for combinations of a plurality of departure points and destination points that have been set in the past. In addition, a user is notified about the comparison results that have been obtained by this comparison.
With the above-described configuration, a comparison of the benefits obtained by the updating of the map information that is stored in the navigation apparatus is made for the combinations of the departure points and destination points that have been set in the past by the user, and the user is notified about the results. Thus, the user can confirm the results of the comparison for the route that will actually be used, and the user can easily confirm the benefits obtained by the updating of the map information.

In the map information updating system according to a second aspect of the present invention, for the combinations of the plurality of departure points and destination points that have been set in the past, improved values, which are due to the routes that have been retrieved by using the post-update map information, are calculated for the routes that have been retrieved by using the map information, and the user is notified about these improved values.
With the above-described configuration, for the route that will actually be used, the user can recognize the improved values, which are due to the routes that have been retrieved by using the post-update map information, for the routes that have been retrieved by using the map information, and the user can more easily recognize the benefits obtained by the updating of the map information.

In the map information updating system according to a third aspect of the present invention, for the combinations of the plurality of departure points and destination points that have been set in the past, improved values, which are due to the routes that have been retrieved by using the post-update map information, are calculated for the routes that have been retrieved by using the map information, and the user is notified about the routes having the largest improved values.
With the above-described configuration, for the route that will actually be used, the user can recognize the routes having the largest improved values, due to the routes that have been retrieved by using the post-update map information, for the routes that have been retrieved by using the map information, and the user can more easily recognize the benefits obtained by the updating of the map information.

In the map information updating system according to a fourth aspect of the present invention, when it is determined that the map information has been updated, for the combinations of the plurality of departure points and destination points that have been set in the past, the routes that have been retrieved by using the map information after updating and the routes that has been retrieved by using the map information before updating are compared. Then, the user is notified about the comparison results that have been obtained by this comparison.
With the above-described configuration, a comparison of what benefits are provided by the updating of the map information that is stored in the navigation apparatus is made for the combinations of departure points and destination points that have been set in the past by the user, and the user is notified about the results. Thus, the user can confirm the comparison results for the route that will actually be used, and the user can easily confirm the benefits obtained by the updating of the map information.

In the map information updating system according to a fifth aspect of the present invention, when it is determined that there has been an update request for the map information, the routes that have been retrieved by using the map information that has been stored in the navigation system and the routes that have been retrieved by using the post-update map information, which is the updated map information, are compared for the combinations of the plurality of departure points and destination points that has been set in the past. Then, the user is notified about the comparison results that have been obtained by this comparison.
With the above configuration, a comparison of what benefits are provided by the updating of the map information that is stored in the navigation apparatus is made for the combinations of departure points and destination points that have been set in the past by the user, and the user is notified about the results. Thus, the user can confirm the comparison results of the route that will actually be used, and the user can easily determine the necessity of the update for the map information.

### BRIEF DESCRIPTION OF THE DRAWINGS

FIG. 1 is a block diagram that shows the navigation system according to a first embodiment;
FIG. 2 is a block diagram that shows the navigation apparatus of the navigation system;
FIG. 3 is a diagram that shows an example of the travel history data table that is contained in the travel history DB of the navigation apparatus;
FIG. 4 is a flowchart that shows the "pre-update update information notification processing" that is executed by the CPU of the navigation apparatus according to the first embodiment and the CPU of the map information distribution center, and provides notification about the benefits that can be obtained by updating the navigation map information of the navigation apparatus side map information DB;
FIG. 5 is a diagram that shows an example of the travel information comparison table according to the first embodiment;
FIG. 6 is a diagram that shows an example of the menu display (selection acceptance) and the effect display of the selected entry that are displayed on the liquid crystal display by the CPU of the navigation apparatus according to the first embodiment;
FIG. 7 is a flowchart that shows the "post-update update information notification processing" that is executed by the CPU of the navigation apparatus according to a second embodiment;
FIG 8 is a diagram that shows an example of the menu display (selection acceptance) and the effect display of the selected entry that are displayed on the liquid crystal display by the CPU of the navigation apparatus according to the second embodiment;
FIG. 9 is a diagram that shows an example of the menu display (selection acceptance) and the effect display of the selected entry that are displayed on the liquid crystal display by the CPU of the navigation apparatus according to another embodiment; and
FIG. 10 is a diagram that shows an example of the menu display (selection acceptance) and the effect display of the selected entry that are displayed on the liquid crystal display by the CPU of the navigation apparatus according to still another embodiment.

### DETAILED DESCRIPTION OF THE PREFERRED EMBODIMENTS

Hereinafter, a map information updating system according to the present invention will be explained in detail with reference to the drawings based on a first embodiment and a second embodiment.

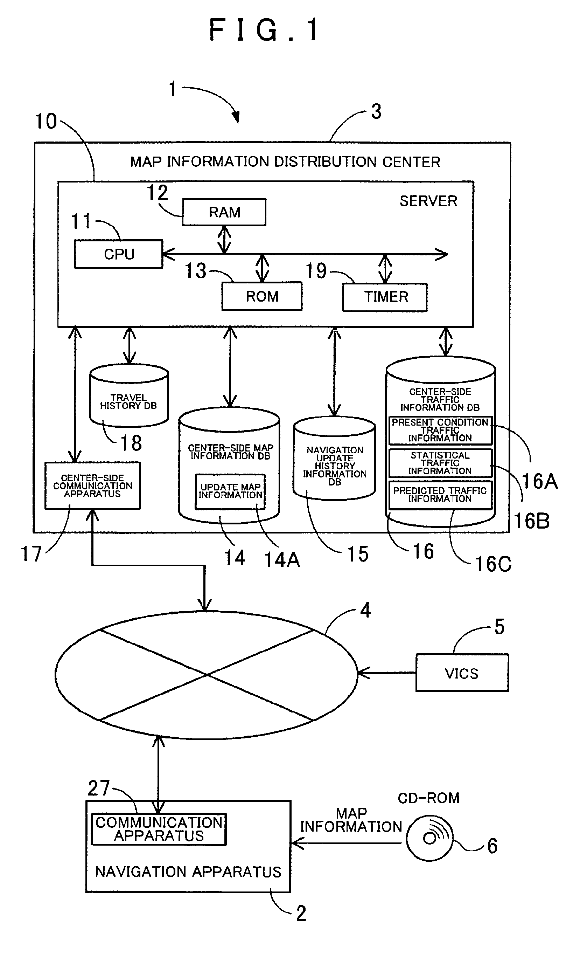

First, the map information updating system according to the present invention will be explained with reference to FIG. 1 to FIG. 6 by using the specific first embodiment of a navigation system.
Here, the schematic structure of a navigation system 1 according to the first embodiment will be explained with reference to FIG 1. FIG. 1 is a block diagram that shows the navigation system 1 according to the first embodiment.

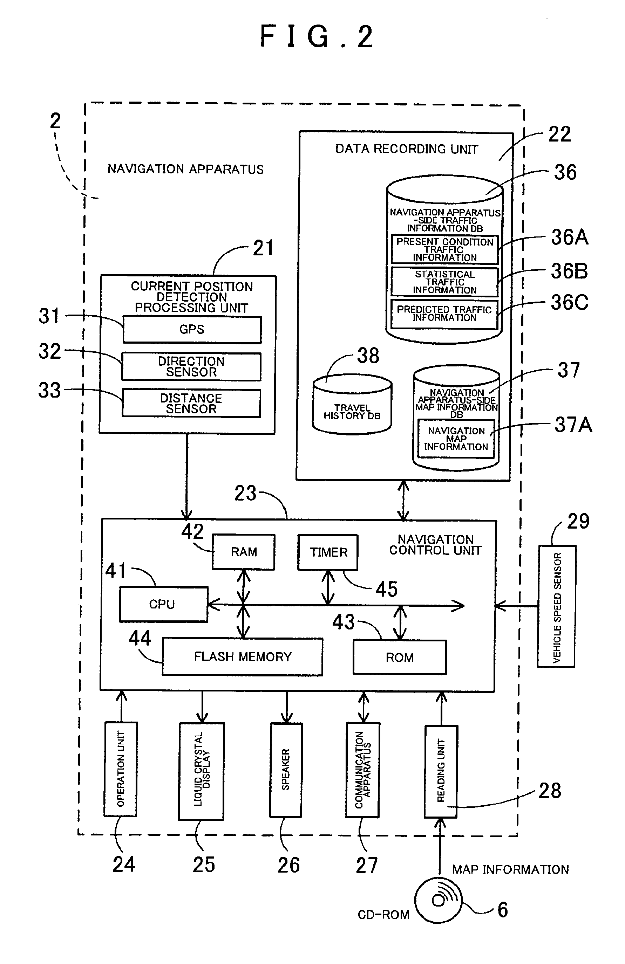

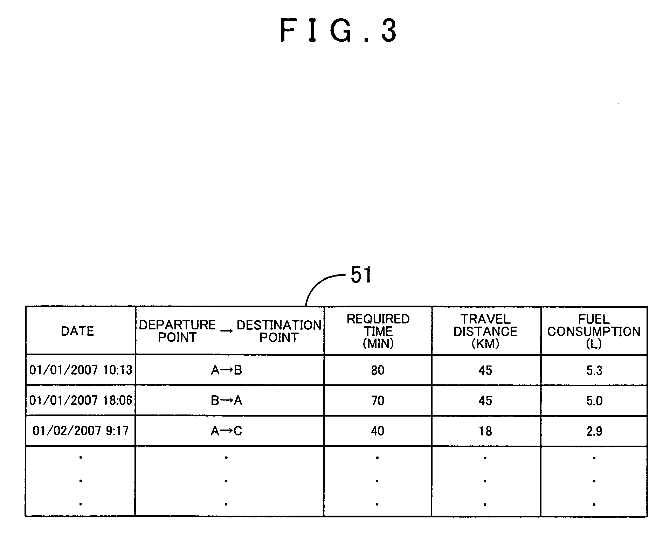

As shown in FIG. 1, the navigation system 1 according to the present embodiment is basically structured by a navigation apparatus 2, a map information distribution center 3, and a network 4. The map information distribution center 3 provides notification to the navigation apparatus 2 about update information for updating the map information and the benefits that can be obtained by updating the map information before updating navigation map information 37A (refer to FIG. 3), which will be described later. In addition, the navigation apparatus 2 and the map information distribution center 3 are structured so as to enable transmission and reception of various information via the network 4.
Note that the structure of the navigation apparatus 2 will be explained later in detail with reference to FIG. 2.

In addition, a Vehicle Information and Communication System (VICS (registered trade name)) 5 is connected to this network 4, and the navigation apparatus 2 and the map information distribution center 3 are structured such that information related to traffic congestion on roads and traffic information, such as traffic regulation information and the like, which are produced by collecting information from the traffic control systems of the Japan Highway Public Corporation, can be received at predetermined time intervals via the network 4. In addition, this traffic information is detailed information related to, for example, road traffic information such as road congestion information that is related to traffic congestion of the roads and the like, and information on traffic regulation due to road construction, building construction, and the like. In the case of road congestion information, the detailed information includes the VICS link ID, the actual length of traffic congestion, the required time from the start of the traffic congestion until the end thereof, the degree of the traffic congestion (no traffic congestion/crowded/congested), the vehicle speed in the traffic congestion, the travel time, the forward direction of the congested traffic lane, and the time at which the traffic congestion is expected to clear. In the case of traffic regulation information, this detailed information includes the VICS link ID, road construction, construction work period, road closures, traffic on one side of the road, types of traffic regulations such as lane regulations, and the timeframe of the traffic regulations and the like.

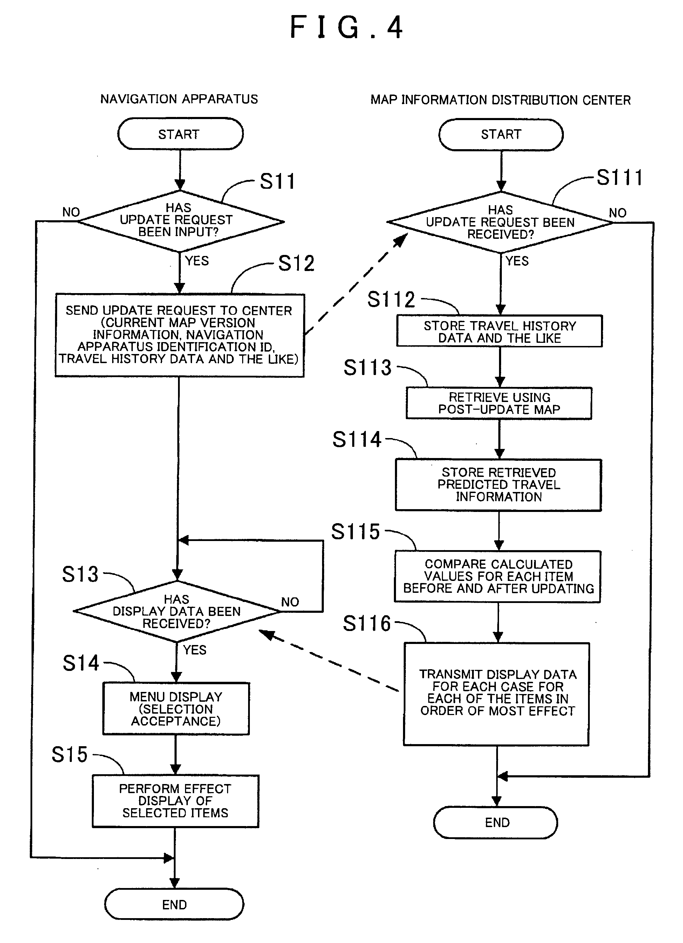

As shown in FIG. 1, the map information distribution center 3 is provided with a server 10, a center-side map information database (center-side map information DB) 14 that serves as a map information recording unit and is connected to the server 10, a navigation update history information database (navigation update history DB) 15, a center-side traffic information database (center-side traffic information DB) 16, a center-side communication apparatus 17, and a travel history database (travel history DB) 18.
In addition, the server 10 is provided with a CPU 11 that serves as an arithmetic apparatus and a control apparatus that carries out the overall control of the server 10, and a RAM 12 that is used as the working memory when the CPU 11 carries out various types of arithmetic processing. In addition, the server 10 is provided with an internal storage unit and a timer 19 that calculates the time. The internal storage unit, such as a ROM 13, records various control programs for carrying out map information updating processing and update information notification processing (refer to FIG 4). In the map information processing, update information (difference data) for updating the map information of a predetermined area, which is included in the map information that has been stored in the navigation apparatus 2, to a new version of the map information based on a request from the navigation apparatus 2 is extracted from the center-side map information DB 14 and distributed to the navigation apparatus 2. In the update information notification processing, the navigation apparatus 2 is notified about update information for benefits and the like that can be obtained by updating the navigation map information 37A (refer to FIG. 2), which will be explained later. Note that an MPU or the like may be used instead of the CPU 11.

In addition, update map information 14A that serves as a basis for updating the map information stored in the navigation apparatus 2 is produced by the map information distribution center 3. The update map information 14A is categorized according to the version and stored in the center-side map information DB 14. Furthermore, the update information, which is for updating a portion or all of the map information that is currently stored in the navigation apparatus 2 to the update map information 14A, is also stored in the center-side map information DB. Here, the term "version" denotes the production time information for specifying the period during which the map information was produced, and it is possible to specify the period during which the map information was produced by referring to the version.

In addition, various types of information that are necessary for carrying out the route guidance and the map display by the navigation apparatus 2 are recorded in the update map information 14A that has been stored in the center-side map information DB 14. This update map information 14A is formed, for example, by map display data for displaying the maps, intersection data that is related to intersections, node data that is related to nodes, link data related to roads (road links), which are a type of facility, retrieval data for retrieving routes, facility data that is related to POI (Points of Interest) such as stores, which are a type of facility, and retrieval data for retrieving cites.

Here, in particular, map display data is configured by units that are divided into quarters (length 1/2), sixteenths (1/4), or sixty-fourths (1/8) based on a two-dimensional mesh that is partitioned into approximately 10 km x 10 km units, and the unit for each area is set such that the data amounts for each unit are substantially at an identical levels. The smallest units, which have the 64-partition size, are about 1.25 square kilometers.
In addition, there are three distribution road segments: a high rank road segment that includes national expressways, urban highways, automobile-only roads, general toll roads, and major national roads; a general road segment that includes general national roads, main regional roads, prefectural roads, and town and village roads; and a narrow street segment that includes narrow streets. Each of these segments is stored in and managed by the update map information 14A according to their respective versions.

In addition, in the case in which a request for update information has been received from the navigation apparatus 2, which will be described below, the map information distribution center 3 provides notification (refer to FIG 4) about the benefits that can be obtained by updating the navigation map information 37A (refer to FIG. 2). In addition, when there has been a distribution request for map information from the navigation apparatus 2, the map information distribution center 3 carries out the updating of the map information that has been stored in the navigation apparatus 2 by using the newest version of the update map information 14A within update map information 14A that is contained in the center-side map information DB 14. Specifically, in the navigation system 1 according to the first embodiment, in the case in which there has been a distribution request for update map information 14A from the navigation apparatus 2, updating is carried out by distributing to the navigation apparatus 2 the difference data for updating to the newest version of the update map information 14A. Here, all information that includes new road information for specifying the new roads of the newest version of the update map information 14A may be transmitted as difference data that is distributed to the navigation apparatus 2, or the necessary minimum information (only information for the updated portions that include the new road information for specifying new roads) for updating from the present map information that is stored in the navigation apparatus 2 to the newest version of the update map data 14A may be transmitted to the navigation apparatus 2.

In contrast, in the navigation update history information DB 15, information that relates to the update history of the updates that have been carried out to the present for map information that is stored in the navigation apparatus 2 is stored along with a navigation apparatus identification ID that specifies the navigation apparatus 2. As map history, specifically, which version of the map information is used for each of the three distribution road segments (i.e., the high rank road segment, the general road segment, and the narrow street segment) is stored in the link data and the node data that form the map information, and the update history is overwritten by new update history each time the update of the map information of the navigation apparatus 2 is carried out.

In addition, present condition traffic information 16A is contained in the center-side traffic information DB 16. The present condition traffic information 16A is information that relates to present traffic congestion on roads and the like, and is produced by collecting the traffic information that has been received from the Vehicle Information and Communication System (VICS (registered trade mark)).
In addition, statistical traffic information 16B, which is generated based on past traffic information that has been received from the Vehicle Information and Communication System (VICS (registered trade mark)), is contained in this center-side traffic information DB 16. Note that this statistical traffic information 16B may include information about scheduled events such as scheduled event venues and dates for festivals, parades, and fireworks, and the like. Further, the statistical traffic information 16B may include statistical traffic congestion information and predicted traffic congestion information about whether traffic congestion will occur at a specified time every day, excluding weekends, on roads in the vicinity of train stations and large-scale commercial facilities, and whether traffic congestion will occur during summer holiday periods on roads in the vicinity of a swimming beach.

Furthermore, predicted traffic information 16C is contained in the center-side traffic information DB 16. This predicted traffic information 16C is predicted traffic congestion information and the like, in the future for present condition traffic congestion that is produced for each road or each link, for predetermined intervals (for example, for approximately 15-minute intervals, approximately 30-minute intervals, and approximately one-hour intervals from the present time) from the position of the vehicle based on the present condition traffic information 16A and the statistical traffic information 16B.
In addition, when there is a request from the navigation apparatus 2, the map information distribution center 3 selects and distributes traffic information between intersections, statistical traffic information 16B, and predicted traffic information 16C, which is predicted traffic congestion information and the like, based on the present condition traffic information 16A that is contained in the center-side traffic information DB 16.

In addition, requests for update information that have been received from the navigation apparatus 2, which will be described later, the travel history data (refer to FIG. 3) and a navigation apparatus identification ID that have been received from the navigation apparatus 2, are contained in the travel history DB 18.
In addition, it is possible to use, for example, a LAN (Local Area Network), a WAN (Wide Area Network), an intranet, or a communication circuit network such as a mobile telephone circuit network, a telephone circuit network, a public communication circuit network, a dedicated communication circuit network, the Internet, or the like, as the network 4. In addition, it is possible to use a communication system that uses CS broadcasting by using a broadcast satellite, BS broadcasting, terrestrial digital television broadcasting, or FM multiplex broadcasting, or the like. Furthermore, it is possible to use a communication system such as the non-stop automatic fee payment system (ETC) that is used in an intelligent transport system (ITS) or dedicated short range communication (DSRC).

In addition, as shown in FIG. 1, when a CD-ROM 6, on which a prescribed version of map information having a prefecture unit or the like, is inserted into a reading unit 28 (refer to FIG. 2), the navigation apparatus 2 reads the prescribed version of map information, and is able to update the navigation map information 37A. Note that an electromagnetic disk such as a flexible disk, a memory card, an electromagnetic tape, an electromagnetic drum, MD, DVD, MO, IC card, optical card, or the like may be used instead of the CD-ROM 6, provided that the medium can be read by the reading unit 28 of the navigation apparatus 2.

Next, the schematic structure of the navigation apparatus 2 that forms the navigation system 1 according to the present embodiment will be explained with reference to FIG. 2. FIG. 2 is a block diagram that shows the navigation apparatus 2 according to the present embodiment.

As shown in FIG. 2, the navigation apparatus 2 according to the present embodiment is structured to include a current position detection processing unit 21 that detects the current position of the vehicle, a data recording unit 22 on which various types of data have been recorded, a navigation control unit 23 that carries out various types of arithmetic processing based on input information, an operating unit 24 that accepts operations from an operator, a liquid crystal display 25 that displays information for the maps and the like to the operator, a speaker 26 that outputs audio guidance related to the route guidance, a communication apparatus 27 that carries out communication via a mobile telephone network and the like between the Vehicle Information and Communication Center (VICS (registered trade mark)) and the map information distribution center 3 and the like, and the reading unit 28 that reads a prescribed version of the map information that is recorded at the prefecture unit or the like from the CD-ROM 6, which serves as a recording medium. In addition, a vehicle speed sensor 29 that detects the traveling speed of the vehicle is connected to the navigation control unit 23.

Hereinafter, each of the structural elements that form the navigation apparatus 2 will be explained. The current position detection processing unit 21 includes, for example, a GPS 31, a direction sensor 32, a distance sensor 33, an altimeter (not illustrated), and the like, and can detect the current position of the vehicle, the direction, the distance to a landmark (for example, an intersection), and the like.

Specifically, the GPS 31 detects the current location of the vehicle on the earth and the current time by receiving radio waves that have been generated by satellites. In addition, the direction sensor 32 is structured by a geomagnetic sensor, a gyroscopic sensor, or an optical rotation sensor that is attached to the rotating portion of the steering wheel (not illustrated), a rotation resistance sensor, an angle sensor that is attached to the wheels, or the like, and the direction sensor 32 detects the direction of the vehicle. In addition, the distance sensor 33 is structured, for example, by a sensor that measures the rotation speed of the wheels (not illustrated) of the vehicle and detects the distance based on the measured rotation speed, or a sensor that measures the acceleration and detects the distance by doubly integrating the measured acceleration, and the distance sensor 33 detects the moving distance of the vehicle.

In addition, the data recording unit 22 is provided with a hard disk (not illustrated) that serves as an external memory apparatus and a storage medium, a navigation apparatus-side traffic information database (navigation apparatus-side traffic information DB) 36, a navigation apparatus-side map information database (navigation apparatus-side map information DB) 37, a travel history database (travel history DB) 38, and a recording head (not illustrated) that is a driver for reading predetermined programs and the like and for writing predetermined data onto the hard disk. Note that, in the present embodiment, a hard disk is used as an external storage apparatus and a storage medium for the data recording unit 22, but in addition to a hard disk, it is also possible to use an electromagnetic disk such as a flexible disk as the external storage apparatus. In addition, it is also possible to use a memory card, an electromagnetic tape, an electromagnetic drum, a CD, an MS, a DVD, an optical disk, an MO, an IC card, an optical card, and the like as the external storage apparatus.

Here, the present condition traffic information 36A is contained in the navigation apparatus-side traffic information DB 36. The present condition traffic information 36A is produced from traffic information that includes, for example, road congestion information and traffic regulation information, which are received from the map information distribution center 3 and the Vehicle Information and Communication Center (VICS) 5. The road congestion information relates to the present congestion of the road, and includes the actual length of the congestion, the required time, the cause of the congestion, and the time at which the congestion is expected to clear, and the like. The traffic regulation information relates to road construction and building construction and the like. In addition, the data that is contained in the statistical traffic information 16B described above, which is distributed from the map information distribution center 3 via the communication apparatus 27, is stored in the statistical traffic information 36B of the navigation apparatus-side traffic information 36B. In addition, the contents of the statistical traffic information 36B is updated by downloading update information for each set of data that is contained in the statistical traffic information 16B described above, which is distributed from the map information distribution center 3 via the communication apparatus 27.
Note that the navigation apparatus 2 may be structured such that the sets of data, which are provided by a CD-ROM or the like and contained in the statistical traffic information 16B, are stored in the statistical traffic information 36B, and are updated based on the travel history at predetermined time intervals (for example, every one week to three months).
Note that this statistical traffic information 36B may include scheduled event information about scheduled event venues and scheduled dates and the like for, parades, and fireworks, and the like. The statistical traffic information 36B may also include statistical traffic congestion information and predicted traffic congestion information about whether traffic congestion will occur at a specified time every day, excluding weekends, on roads in the vicinity of train stations and large-scale commercial facilities, and whether traffic congestion will occur during summer holiday periods on roads in the vicinity of a swimming beach.

Furthermore, sets of data that are distributed from the map information distribution center 3 via the communication apparatus 27 and contained in the predicted traffic information 16C described above are stored in the navigation apparatus-side traffic information DB 36. In addition, the contents of the predicted traffic information 36C are updated by downloading the update information for each set of data that is contained in the predicted traffic information 16C described above that has been distributed from the map information distribution center 3 via the communication apparatus 27.
Note that the navigation apparatus 2 may be structured such that sets of data, which are provided by a CD-ROM or the like and are contained in the predicted traffic information 16C described above, are stored in the predicted traffic information 36C, and the sets of data are updated at predetermined time intervals (for example, one week to three months) based on the present condition traffic information 36A and the statistical traffic information 36B.

In addition, the navigation map information 37A, which is used in the travel guidance and route searches of the navigation apparatus 2 and is the object of updating by the map information distribution center 3, is contained in the navigation apparatus-side map information DB 37. Here, similar to the update map information 14A, the navigation map information 37A is formed by various types of information that are necessary for route guidance and map display, and is formed by, for example, new road information for specifying new roads, map display data for displaying maps, intersection data related to intersections, node data related to nodes, link data related to roads (links), which are a type of facility, retrieval data for retrieving routes, store data related to POI, such as stores, which are a type of facility, and retrieval data for retrieving locations.
In addition, the content of the navigation apparatus-side map information DB 37 is updated by downloading difference data that is distributed from the map information distribution center 3 via the communication apparatus 27. In addition, the content of the navigation apparatus-side map information DB 37 is also updated by reading, via the reading unit 28, a prescribed version of map information that is recorded on a CD-ROM 6 inserted in the reading unit 28.
In addition, a travel history data table 51 (refer to FIG. 3) is contained in the travel history DB 38, and stores information related to the travel history for departure points and destination points and the like that are related to routes that have been traveled in the past, which will be described below.

In addition, as shown in FIG. 2, the navigation control unit 23 that structures the navigation apparatus 2 is provided, for example, with a CPU 41 that serves as an arithmetic apparatus and a control apparatus, which carries out overall control of the navigation apparatus 2; internal storage units such as a RAM 42 that is used as the working memory when the CPU 41 is carrying out various types of arithmetic processing and that stores route data when retrieving routes and traffic information, which is received from the map information distribution center 3, a ROM 43 that stores, in addition to control programs, an update information notification processing program (refer to FIG. 4) that notifies the user about update information that relates, for example, to the benefits that can be obtained by updating the navigation map information 37A (refer to FIG. 2), which will be described below, and a flash memory 44 that stores the programs that are read from the ROM 43; and a timer 45 that measures time. Note that semiconductor memory, electromagnetic core or the like is used as the RAM 42, the ROM 43, the flash memory 44 and the like. In addition, instead of the CPU 41, an MPU or the like can be used as the arithmetic apparatus and the control apparatus.

In addition, in the present embodiment, different types of programs are stored in the ROM 43, and various types of data are stored in the data recording unit 22. However, it is possible to read programs, data, and the like from the same external storage apparatus or a memory card or the like, and write them to the flash memory 44. Furthermore, it is possible to update the programs, data, and the like by exchanging the memory cards or the like.

Furthermore, peripheral apparatuses (actuators) of the operating unit 24, the liquid crystal display 25, the speaker 26, the communication apparatus 27, and the reading unit 28 are electrically connected to the navigation control unit 23.
This operating unit 24 is operated, for example, in the cases in which the current position at the start of travel is corrected, the departure point, which serves as the guidance starting point, and the destination point, which serves as the guidance ending point, are input, information related to facilities is retrieved, and is structured by different types of keys and a plurality of operating switches. In addition, based on switching signals that are output, for example, by pressing down the switches, the navigation control unit 23 carries out control in which different types of corresponding actions are executed. Furthermore, a touch panel is provided on the front surface of the liquid crystal display 25, and it is possible to input different types of directing commands by pressing buttons that are displayed on the screen. Note that it is possible to use a keyboard, a mouse, a barcode reader, a remote control apparatus that is used for remote control, a joystick, a light pen, a stylus pen or the like, as the operation unit 24.

Additionally, on the liquid crystal display 25, operating guidance, operating menus, key guidance, recommended routes from the present position to the destination point, guidance information along the recommended route, traffic information, news, weather reports, the time, mail, television programs and the like are displayed, in addition to the route guidance screen that displays maps, which are based on the navigation map information 37A, and that displays the traffic information for each link.
In addition, the speaker 26 outputs, for example, audio guidance that guides the travel along the recommended route based on instructions from the navigation control unit 23. Here, for example, phrases such as "200 meters ahead, turn right at xx intersection" or "please press the newest function merit button" are examples of the audio guidance.

In addition, the communication apparatus 27 is a communication device that carries out communication with the map information distribution center 3 by using, for example, a mobile telephone network, and carries out the transmission and reception of the newest version of the update map information and the present condition traffic information and the like with the map information distribution center 3. In addition to the map information distribution center 3, the communication apparatus 27 receives traffic information that is formed by various types of information, such as the traffic congestion information, regulation information, parking lot information, traffic accident information, crowded conditions at service areas, and the like, which are transmitted from the Vehicle Information and Communication Center (VICS) 5.
In addition, the reading unit 28 reads a prescribed version of the map information that is recorded on the inserted CD-ROM 6.

Here, the travel history data table 51 that is stored in the travel history DB 38 of the navigation apparatus 2 and that contains the travel history will be explained with reference to FIG. 3. FIG. 3 is a diagram that shows an example of the travel history data table 51 that is contained in the travel history DB 38 of the navigation apparatus 2.
As shown in FIG. 3, the travel history data table 51, which stores the travel history, is structured by a "date" that shows the year, month, day, and the travel start time that the travel occurred, "departure point → destination point", which shows the departure point and the destination point (arrival point) of the route that was traveled, the "required time (min)", which shows the required time for the route that was traveled, the "travel distance (km)", which shows the travel distance of the route that was traveled, and the "fuel consumption (1)", which shows the amount of the fuel that has been consumed on the route that was traveled.

Note that the travel distance of the route that was traveled can be calculated by reading the distance of each link that has been traveled from the navigation map information 37A, and totaling the distances. In addition, the data for the average fuel consumption (km/l) is stored in advance on the data recording unit 22, the ROM 43, and the flash memory 44 for each road type that is included in the three segments, which include the high rank road segment, the general road segment, and the narrow street segment. For example, the average fuel consumption when traveling along road in the high rank road segment of 10 (km/l) and the average fuel consumption when traveling along a road in the general road segment of 6 (km/I) are contained in advance in the data recording unit 22, the ROM 43, and the flash memory 44. Therefore, the CPU 41 totals the distances of each of the traveled links for each road type, divides the results by the average fuel consumption for the road type corresponding to each of the totaled distances, and totals the results. Thus, it is possible to calculate the fuel consumption (1) of the route that has been traveled from the departure point to the destination point. Furthermore, the CPU 41 divides the fuel consumption (1) of the traveled route from the departure point to the destination point by the total travel distance (km) of the route, and thereby it is also possible to calculate the average fuel consumption (km/l) of the entire route.

Next, in the navigation system 1 having the structure that has been described above, the pre-update update information notification processing will be explained with reference to FIG. 4. The pre-update information notification processing is executed by the CPU 41 of the navigation apparatus 2 and the CPU 11 of the map information distribution center 3, and provides notification about the benefits that can be obtained by updating the navigation map information 37A of the navigation apparatus-side map information DB 37.
FIG. 4 is a flowchart that shows, in the navigation system 1 according to the first embodiment, the "pre-update update information notification processing" that is executed by the CPU 41 of the navigation apparatus 2 and the CPU 11 of the map information distribution center 3, and provides notification about the benefits that can be obtained by updating the navigation map information 37A of the navigation apparatus-side map information DB 37. Note that each of the programs that are shown in the flowchart in FIG. 4 is stored in the ROM 43 of the navigation apparatus 2 and the ROM 13 of the map information distribution center 3, and executed by the CPUs 41 and 11 at predetermined time intervals (for example, approximately every 10 milliseconds to every 100 seconds).

As shown in FIG. 4, first, in step (below, abbreviated as "S") 11, the CPU 41 of the navigation apparatus 2 executes determination processing in which it is determined whether or not an update request instruction, which directs the updating of the navigation map information 37A, has been input via the operating unit 24.
In addition, in the case in which the update request instruction, which directs the updating of the navigation map information 37A, has not been input via the operation unit 24 (S11: NO), the CPU 41 ends this processing.

In contrast, in the case in which the update request instruction, which directs the updating of the navigation map information 37A has been input via the operation unit 24 (S11: YES), the CPU 41 proceeds to the processing in S12.
In S12, the CPU 41 transmits a request command, which requests the updating of the navigation map information 37A, to the map information distribution center 3. In addition, simultaneously to the request command that requests this updating of the navigation map information 37A, the CPU 41 transmits to the map information distribution center 3 via the communication apparatus 27 the navigation apparatus identification ID that identifies the navigation apparatus 2, the version of the current map information that is contained in the navigation map information 37A, the travel history data (data such as the "date", the "departure point → destination point", the "required time (min)", the "travel distance (km)", and the "fuel consumption (1)") that is contained in the travel history data table 51 that is stored in the travel history DB 38.
Note that the CPU 41 may transmit sets of the travel history data from 3 to 6 months ago, which are stored in the travel history data table 51 to the present.

At the same time, as shown in FIG 4, the CPU 11 of the map information distribution center 3 executes in S111 determination processing, which determines whether or not a request command that requests the updating of the navigation map information 37A has been received from the navigation apparatus 2 via the center-side communication apparatus 17.
In addition, in the case in which the request command, which requests the updating of the navigation map information 37A, has not been received (S111: NO), the CPU 11 ends this processing.

In contrast, in the case in which the request command, which requests the updating of the navigation map information 37A, has been received (S111: YES), the CPU 11 proceeds to the processing in S112. In S112, the CPU 11 stores, for example, the navigation apparatus identification ID that is retrieved via the center-side communication apparatus simultaneously with the request command, the version of the current map information that is contained in the navigation map information 37A, the travel history data (data such as the "date", the "departure point → destination point", the "required time (min)", the "travel distance (km)", the "fuel consumption (1)") in the travel history DB 18.
Next, in S 113, the CPU 11 reads in sequence the "date" and the "departure point → destination point" in the travel history data that has been received from the travel history DB 18. Thereafter, based on the newest version of the map information that is contained in the update map information 14A, the present condition traffic information 16A, and the statistical traffic information 16B, the CPU 11 retrieves routes that correspond to the "departure point → destination point", which is based on the weekday of the "date", season, and departure time. Then, the CPU 11 stores the route information related to each of these retrieved routes in the RAM 12.

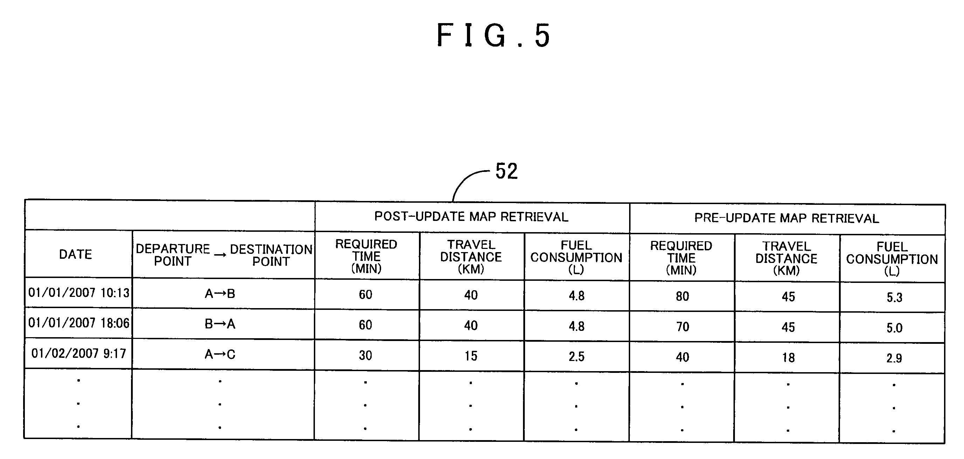

In addition, in S 114, the CPU 11 calculates the "required time (min)", the "travel distance (km)", and the "fuel consumption (1)" for each route based on the route information related to each of these retrieved routes, and stores the results as predicted travel information in the RAM 12. Subsequently, the CPU 11 produces the travel information comparison table 52 (refer to FIG. 5) based on the travel history data (the data for the "date", the "departure point → destination point", the "required time (min)", the "travel distance (km)", and the "fuel consumption (1)" that have been received) of the navigation apparatus 2 that is stored in the travel history DB 18, and the predicted travel information (the data for the "required time (min)", the "travel distance (km)", and the "fuel consumption (1)" that have been calculated based on the route information for each of the retrieved routes) that is stored in the RAM 12, and stores this travel information comparison table 52 in the travel history DB 18.
Thus, the CPU 11 can compare each of the "required time (min)", the "travel distance (km)", and the "fuel consumption (1)" entries for each of the routes "before updating (the current version)" and "after updating (the newest version)" of the navigation map information 37A that correspond to the "date" and the " departure point → destination point", based on the travel information comparison table 52.

Here, the travel information comparison table 52 that is contained in the travel history DB 18 will be explained with reference to FIG. 5. FIG. 5 is a drawing that shows an example of the travel information comparison table 52 according to the first embodiment.
As shown in FIG. 5, the travel information comparison table 52 is structured by the "date", which shows the year, month, day, and the travel start time that traveling occurred, the "departure point → destination point", which shows the departure point and the destination point" (the arrival point) of the route that has been traveled, and these are included in the received travel history data, the "post-update map retrieval", which shows the "required time (min)", the "travel distance (km)", the "fuel consumption (1)" for each of the routes that have been retrieved based on the newest version of the map information contained in the update map information 14A, the present condition traffic information 16A, and the statistical traffic information 16B and the like, and the "pre-update map retrieval ", which shows the "required time (min)", the "travel distance (km)", and the "fuel consumption (1)" of each of the routes that has been received.

Note that the "travel distance (km)" in the "post-update map retrieval" of the travel information comparison table 52 can be calculated by reading the distance of each of the links of the roads that have been retrieved from the newest version of the map information that is contained in the update map information 14A, and totaling the results. In addition, the data for the average fuel consumption (km/l) is contained in advance in the travel history DB 18 and the ROM 13 and the like for each of the road types that are included in the three segments: the high rank road segment, the general road segment, and the narrow street segment. For example, the average fuel consumption when traveling on a road in the high rank road segment of 10 (km/l) and the average fuel consumption when traveling along a road in the general road segment of 6 (km/l) and the like are contained in advance in the travel history DB 18 and the ROM 13, and the like. Therefore, for the "fuel consumption (1)" of the "post-update map retrieval" of the travel information comparison table 52, the fuel consumption (1) of the routes that have been traveled from the departure point to the destination point can be calculated by totaling the distances of each of the links of each of the roads that have been retrieved for each road type and dividing the results by the average consumption for each of the road types that correspond to each of the totaled distances and then totaling the results. Furthermore, the CPU 11 can calculate the average fuel consumption (km/l) for the entire route that has been retrieved by dividing the "fuel consumption (1)" of the routes that have been retrieved from the departure point to the destination point by the "travel distance (km)" of the routes that have been retrieved.

Next, in S115, the CPU 11 compares the "post-update map retrieval" and the "pre-update map retrieval" of the travel information comparison table 52 for each of the "required time (min)", the "travel distance (km)", and the "fuel consumption (1)" entries based on the travel information comparison table 52 that is contained in the travel history DB 18. In addition, the CPU 11 selects several cases (for example, from three to five cases) for each of the entries starting from the superior cases in order of most improved effect, and stores the results in the RAM 12.

For example, for the "required time (min)" of the "post-update map retrieval" and the "pre-update map retrieval" of the travel information comparison table 52, in the case in which the "date" is 2007/XX/YY/ZZ:ZZ, and the "departure point → destination point" is "C → D", the CPU 11 stores case of being "reduced by 30 minutes" is stored in the RAM 12 as the case in which the time is reduced by the greatest amount. In addition, for the case in which the "date" is 2007/1/1/10:13 and the "departure point → destination point" is "A → B", the CPU 11 stores the case of being "reduced by 20 minutes" in the RAM 12 as the case in which the time is reduced by the second greatest amount. Furthermore, for the case in which the "date" is 2007/XX/YY/ZZ:ZZ and the "departure point → destination point" is "A→ F", the CPU 11 stores the case of being "reduced by 15 minutes" in the RAM 12 as the case in which the time is reduced by the third greatest amount.

In addition, in S 116, the CPU produces display data that shows improved values (for example, a "30 minute reduction" for "C → D", a "20 minute reduction" for "A → B", a "20 km reduction" for "A→ B", a "15 km reduction" for "E → F", a "2.0 liter reduction" for "A → B", and a "1.1 liter reduction" for "E → F") that have been selected for each of the cases starting from the superior cases in order of the most improved effect for each of the "required time (min)", the "travel distance (km)", and the "fuel consumption (1)" entries, and stores the results in the RAM 12. Subsequently, the CPU 11 reads the navigation apparatus identification ID that corresponds to the travel history data that has been received from the travel history DB 18, reads and transmits this "display data" from the RAM 12 to the navigation apparatus 2 that corresponds to this navigation apparatus identification ID, and at the same time, ends this processing after transmitting the newest version of the version information of the update map information 14A.

In addition, as shown in FIG. 4, in S 13, the CPU 14 of the navigation apparatus 2 waits to receive the "display data" that shows the improved content for each of the "required time (min)", the "travel distance (km)", and the "fuel consumption (1)" entries from the map information distribution center 3 via the communication system 27.
In addition, in the case in which the "display data" that shows the improved content for each of the "required time (min)", the "travel distance (km)", and the "fuel consumption (1)" entries from the map information distribution center 3 has been received (S13: YES), the CPU 41 proceeds to the processing of S 14.

In S14, the CPU 14 stores in the RAM 42 the "display data" that shows the improved content for each of the "required time (min)", the "travel distance (km)", and the "fuel consumption (1)" entries that have been received. In addition, the newest version of the version information of the update map information 14A that has been received simultaneously with this "display data" is stored in the RAM 42. In addition, the CPU 41 displays on the liquid crystal display 25 the menu display (selection acceptance) that accepts the display of the improved content in the case in which the navigation map information 37A has been updated to the newest version of the map information.
In addition, in S 15, in the case in which an entry is selected from the menu display that has been displayed on the liquid crystal display 25 via the operation unit 24, the CPU 41 reads the display data that corresponds to this entry from the "display data" that shows the improved content for each of the entries that has been stored in the RAM 42 in S14, described above, and after displaying this on the liquid crystal display 25, ends this processing. In contrast, in the case in which a suspension of the menu display has been directed via the operation unit 24, the CPU 41 ends this processing.

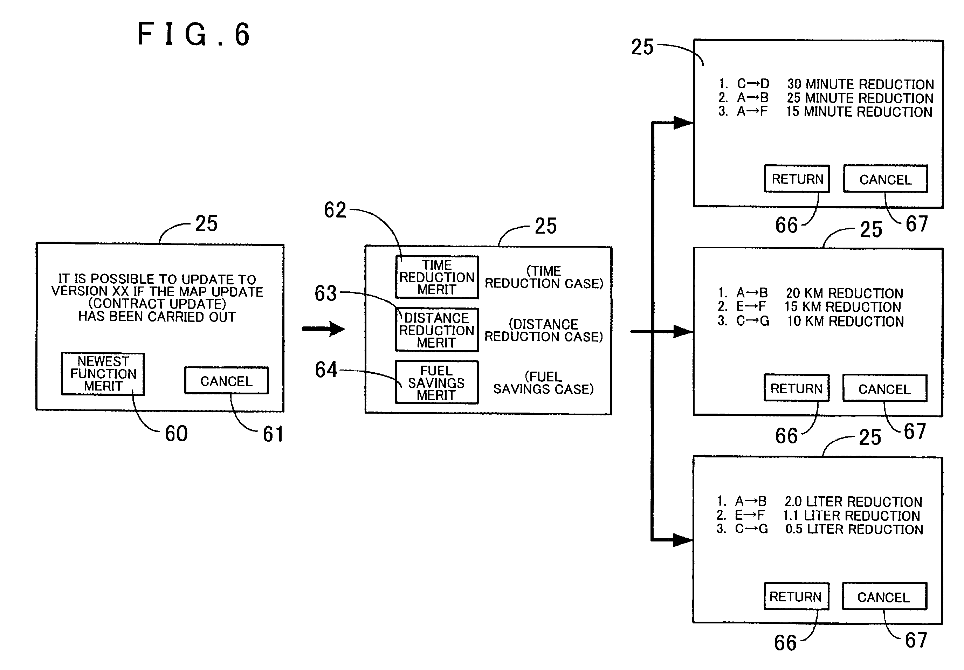

Here, an example of the menu display (selection acceptance) that the CPU 41 displays on the liquid crystal display 25 and the effect display of the selected entry will be explained with reference to FIG. 6. FIG. 6 is a diagram that shows an example of the menu display (selection acceptance) that the CPU 41 of the navigation apparatus 2 according to the first embodiment displays on the liquid crystal display 25, and the effect display for the selected entries.

As shown in FIG 6, first, the CPU 41 reads the newest version of the version information (for example, the newest version is "version xx") of the update map information 14A from the RAM 42, and displays "in the case in which the map data has been updated (contract update), it is possible to update to version xx" on the liquid crystal display 25. In addition, in the case in which the navigation map information 37A has been updated to the newest version of the map information, the CPU 41 displays a newest function merit button 60 that directs the display of the improved content on the left side of the lower edge portion of the liquid crystal display 25. In addition, the CPU 41 displays, on the right side of this newest function merit button 60, a cancel button 61 that directs canceling of the display of the content that has been improved in the case in which the navigation map information 37A has been updated.

In addition, as shown in the middle portion of FIG. 6, in the case in which the newest function merit button 60 has been pressed via the touch panel or the operation button, the CPU 41 arranges vertically and displays on the liquid crystal display 25 a time reduction merit button 62 that directs the display of the improved content of the "required time (min)" entry, a distance reduction merit button 63 that directs the display of the "display data" that shows the improved content of the "travel distance (km)" entry, and a fuel saving merit button 64 that directs the display of the "display data" that shows the improved content of the entry for "fuel consumption (1)". In addition, the CPU 41 displays "time reduction case" on the right side of the time reduction merit button 62. Additionally the CPU 41 displays "distance reduction case" on the right side of the distance reduction merit button 63. Furthermore, the CPU 41 displays "fuel savings case" on the right side of the fuel savings merit button 64.
Note that in the case in which the cancel button 61 has been pressed via the touch panel or the operation button, the CPU 41 cancels the display of the content that has been improved in the case in which the navigation map information 37A has been updated.

Next, as shown at the right upper portion of FIG. 6, in the case in which the time reduction merit button 62 has been pressed via the touch panel or the operation button, the CPU 41 reads the "display data" that shows the improved content of the "necessary time (min)" entry from the RAM 42, and displays the result on the liquid crystal display 25. Thus, among the routes that have been traveled in the past, three cases are displayed starting from the superior cases in order of the most distance reduction effect that has been obtained by updating the navigation map information 37A.
In addition, as shown in the right middle portion of FIG. 6, in the case in which the distance reduction merit button 63 has been pressed via the touch panel or the operation button, the CPU 41 reads the "display data" that shows the improved content of the "travel distance (km)" entry from the RAM 42, and displays the result on the liquid crystal display 25. Thus, among the routes that have been traveled in the past, three cases are displayed starting from the superior cases in order of the most distance reduction effect that has been obtained by updating the navigation map information 37A.

Furthermore, as shown in the right bottom portion of FIG. 6, in the case in which the fuel savings merit button 64 has been pressed via the touch panel or the operating button, the CPU 41 reads the "display data" that shows the improved content of the "fuel savings (1)" entry from the RAM 42, and displays the result on the liquid crystal display 25. Thus, among the routes that have been traveled in the past, three cases are displayed starting from the superior cases in order of the most distance reduction effect that has been obtained by updating the navigation map information 37A.
In addition, at the lower edge of the liquid crystal display 25, the CPU 41 displays a return button 66 that directs returning to the previous screen display. In addition, at the right side of the return button 66, the CPU 41 displays a cancel button 67 that directs the cancellation of the display of the improved content in the case in which the navigation map information 37A has been updated to the newest version of the map information. Thus, in the case in which the return button 66 has been pressed via the touch panel or an operating button, the CPU 41 displays the previous screen. In addition, in the case in which the cancel button 67 has been pressed via the touch panel or the operating button, the CPU 41 cancels the display of the content that has been improved in the case in which the navigation map information 37A has been updated.

As has been explained in detail above, in the navigation system 1 according to the first embodiment, in the case in which the navigation apparatus identification ID and the version of the current map information that is contained in the navigation map information 37A, and the travel history data that is stored in the travel history data table 51 that is contained in the travel history DB 38 have been received along with a request command that requests the updating of the navigation map information 37A, based on the received travel history data, the CPU 11 of the map information distribution center 3 retrieves the routes that correspond to the "departure point" and the "destination point" of each of the routes that have been traveled in the past based on the newest version of the map information that is contained in the update map information 14A, the present condition traffic information 16A, and the statistical traffic information 16B and the like, and stores the route information that is related to each of these retrieved routes in the RAM 12 (S 111 to S113). In addition, the CPU 11 calculates the "required time (min)", the "travel distance (km)", and the "fuel consumption (1)" for each of the retrieved routes, and stores the results in the RAM 12 as the predicted travel information. Subsequently, the CPU 11 produces the travel information comparison table 52 based on the travel history data of the navigation apparatus 2 that is stored in the travel history DB 18, and the predicted travel information that is stored on the RAM 12. In addition, the CUP 11 compares the "post-update map retrieval" and the "pre-update map retrieval" of this travel information comparison table 52 entry by entry, and selects several cases starting from the superior cases (improved values) in order of most improved effect, produces "display data" that displays the results, and transmits the "display data" to the navigation apparatus 2 (S 114 to S116).

In contrast, after storing the received "display data" in the RAM 42, the CPU 41 of the navigation apparatus 2 displays on the liquid crystal display 25 the menu display (selection acceptance) that accepts the display of the improved content in the case in which the navigation map information 37A has been updated to the newest version of the map information. Subsequently, in the case in which an entry has been selected from the menu display, the "display data" that corresponds to this entry is displayed on the liquid crystal display 25 (S 13 to S15).

Thus, in the case in which the CPU 41 of the navigation apparatus 2 has requested the map information distribution center 3 to update the map information that is stored in the navigation map information 37A, for the "date", the "departure point", and the "destination point" of each of the sets of travel history data that are stored in the travel history data table 51, the CPU 41 receives, from the information distribution center 3, the comparison results for each of the routes that have been retrieved based on the map information of the navigation map information 37A and each of the routes that has been retrieved based on the newest version of the update map information 14A, the present condition traffic information 16A, and the statistical traffic information 16B, and can display each of the "required time (min)", the "travel distance (km)", and the "fuel consumption (1)" entries on the liquid crystal display 25.

In addition, the CPU 41 displays on the liquid crystal display 25 several cases for each of the "required time (min)", the "travel distance (km)", and the "fuel consumption (1)" entries starting from the superior cases (improved values) in order of most improved effect. Thus, the user can confirm for several cases of each of the entries the comparison results for routes that are actually used, can easily confirm the benefits that are due to the updating of the map information, and can easily determine the necessity of the updating of the navigation map information 37A.

### [Second Embodiment]

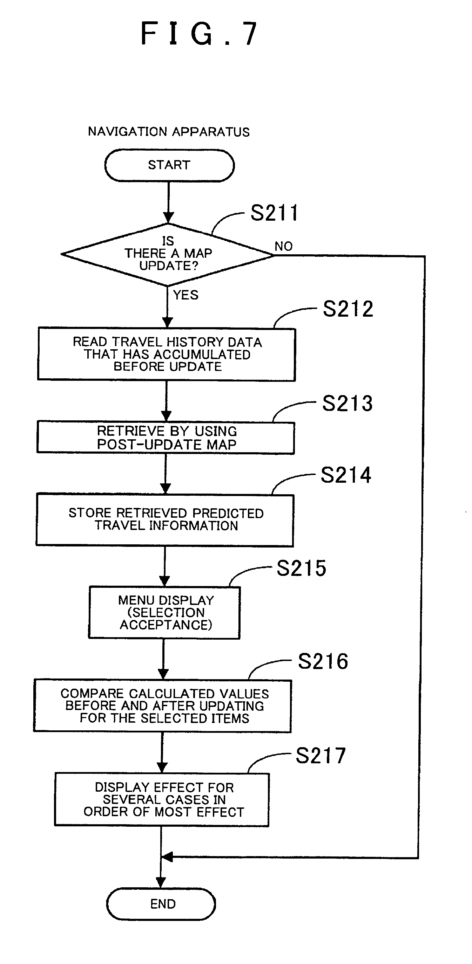

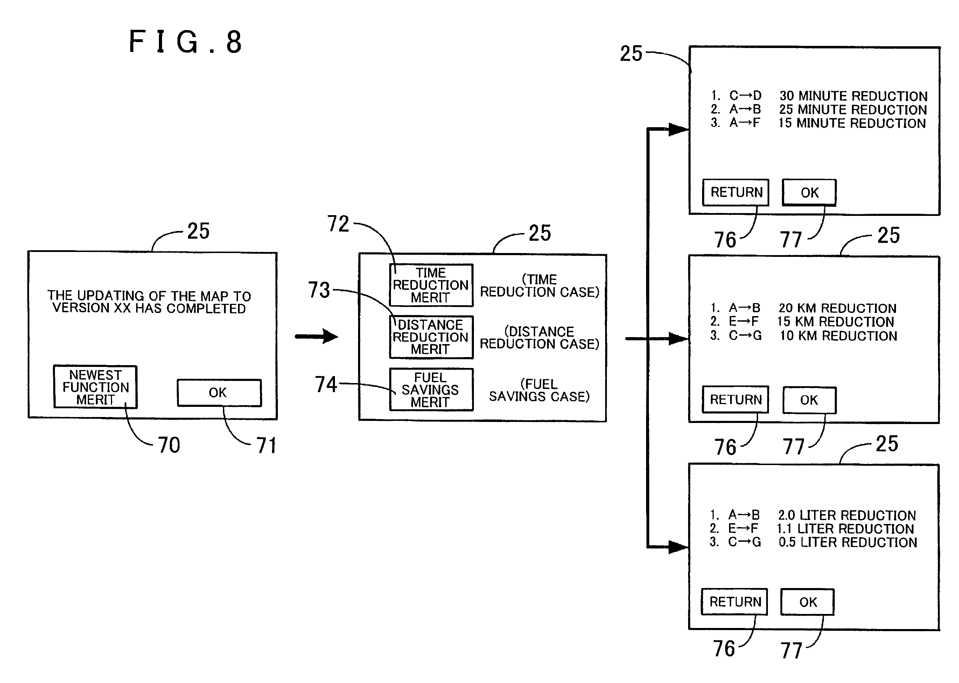

Next, a second embodiment that realizes a map information update system according to the present invention for the navigation apparatus 2 that forms the navigation system 1 according to the first embodiment will be explained with reference to FIG. 7 and FIG. 8.
Therefore, in the following explanation, reference numerals that are identical to the structures of the navigation apparatus 2 according to the first embodiment in FIG. 1 to FIG 6 show portions that are identical to or correspond to the structures of the navigation apparatus 2 according to the first embodiment.

First, the post-update update information notification processing that is executed by the CPU 41 of the navigation apparatus 2 and provides notification about the benefits that are obtained by the updating of this navigation map information 37A after updating the navigation map information 37A will be explained with reference to FIG 7. FIG. 7 is a flowchart that shows the "post-update update information notification processing" that is executed by the CPU 41 of the navigation apparatus 2 according to the second embodiment.
Note that in FIG. 7, the program that is shown in the flowchart for S211 to S217 is stored in the RAM 42 and ROM 43, which are provided in the navigation apparatus 2, and executed at predetermined time intervals (for example, from every 10 milliseconds to every 100 milliseconds) by the CPU 41.

As shown in FIG. 7, first, in S211, the CPU 41 reads a prescribed version of the map information at a prefecture unit or the like from a CD-ROM 6 that is inserted in the reading unit 28, and executes the determination processing that determines whether or not the navigation map information 37A has been updated. In the case in which the navigation map information 37A has not been updated (S211: NO), the CPU 41 ends this processing.
In contrast, in the case in which the navigation map information 37A has been updated (S211: YES), the CPU 41 proceeds to the processing of S212. In S212, the CPU reads each of the sets of travel history data (each of the data sets of the "date", the "departure point" → "destination point", the "required time (min)", the "travel time (km)", and the "fuel consumption (1)") that are stored in the travel history data table 51, which is contained in the travel history DB 38, and stores the results in the RAM 42.

Note that the CPU 41 may transmit each of the sets of the travel history data from 3 months to 6 months ago to the present, which are stored in the travel history data table 51.
In addition, the CPU 41 may carry out the processing after S212 not only in the case in which the navigation map information 37A is updated by reading a prescribed version of the map information at a prefecture unit or the like from the CD-ROM 6 that has been inserted into the reading unit 28, but also in the case in which, for example, the navigation map information 37A is updated by receiving difference data for updating to the newest version of the map information from the information distribution center 3, and the case in which the navigation map information 37A is comprehensively updated at a dealer or the like.

In addition, in S213, the CPU 41 reads in sequence the "date" and the "departure point → destination point" in the travel history data from the RAM 42, and based on the day of the week of this "date", the season, and the departure time, retrieves routes that correspond to the "departure point → destination point" based on the map information of the updated navigation map information 37A, the present condition traffic information 36A, and the statistical traffic information 36B, and the like, and stores the route information related to each of these retrieved routes in the RAM 42.
Next, in S214, the CPU 41 calculates the "required time (min)", the "travel time (km)", and the "fuel consumption (1)" for each of the routes based on the route information related to each of these retrieved routes, and stores the results in the RAM 42 as the predicted travel information. Subsequently, the CPU 41 produces the travel information comparison table 52 described above (refer to FIG. 5) based on the travel history data (each of the sets of data for the "date", the "departure point → destination point", the "required time (min)", the "travel distance (km)", and the "fuel consumption (1)") of the navigation apparatus 2 that are stored in the RAM 42, and each of the sets of predicted travel information (each of the sets of data for the "required time (min)", the "travel distance (km)", and the "fuel consumption (1)" that has been calculated based on the route information for each of the retrieved routes) that are stored in the RAM 42, and stores the results in the travel history DB 38.
Thus, based on this travel information comparison table 52, the CPU 41 can compare each of the "required time (min)", the "travel distance (km)", and the "fuel consumption (1)" entries for each of the routes that has been retrieved by using the "pre-update map information" of the navigation map information 37A that corresponds to the "date" and the "departure point → destination point" and each of the routes that have been retrieved by using the "post-update map information".

Note that this travel information comparison table 52 is structured by the "date" that shows the year, month, day, and the travel start time that the travel occurred, that is included in each of the sets of travel history data that are stored in the travel history data table 51, the "departure point → destination point" that shows the departure point and the destination point (arrival point) of the route that has been traveled, the "post-update map retrieval" that shows the "required time (min)", the "travel distance (km)", and the "fuel consumption (1)" for each of the routes that have been retrieved based on the map information of the updated navigation map information 37A, the present condition traffic information 36A, and the statistical travel information 36B, and the "pre-update map retrieval" that shows the "required time (min)", the "travel distance (km)", and the "fuel consumption (1)" for each of the routes that is included in each of the sets of the travel history data that are stored in the travel history data table 51.

Then, in step S215, the CPU 41 displays on the liquid crystal display 25 the menu display (selection acceptance), which accepts the display of the content that has been improved by updating the map information of the navigation map information 37A.
Next, in S216, the CPU 41 compares each of the sets of data that correspond to the entries that have been selected in the "post-update map retrieval" and the "pre-update map retrieval" of the travel information comparison table 52, which is contained in the travel history DB 38, in the case in which a selection menu that corresponds to any of the "required time (min)", the "travel distance (km)", and the "fuel consumption (1)" entries from the menu display that is displayed on the liquid crystal display 25 has been selected via the operation unit 24. In addition, the CPU 41 selects several cases (for example, three to five cases) starting from the superior cases in order of most improved effect before and after the updating of the navigation map information 37A, and stores the results in the RAM 42.

For example, for the "required time (min)" of the "post-update map retrieval" and the "pre-update map retrieval" in the travel map comparison table 52, in the case in which the "date" is 2007/XX/YY/ZZ:ZZ and the "departure point → destination point" is "C → D", the CPU 41 stores the case for a "30 minute reduction" in the RAM 42 as the best case for time reduction. Further, in the case in which the "date" is 2007/1/1/10:30 and the "departure point → destination point" is "A → B", the CPU 41 stores the case for a "20 minute reduction" in the RAM 42 as the second best case for time reduction. Furthermore, in the case in which the "date" is 2007/XX/YY/ZZ:ZZ and the "departure point → destination point" is "A → F", the CPU 41 stores the case for a "15 minute reduction" in the RAM 42 as the third best case for time reduction.

Next, in S217, the CPU 41 reads several cases that are superior cases in order of most improved effect that correspond to these selected entries from the RAM 42, and after displaying the results on the liquid crystal display 25, ends this processing. In addition, in contrast, in the case in which the cancellation of the menu display has been directed via the operation unit 24, the CPU 41 ends this processing.

Here, an example of the menu display (selection acceptance) that is displayed by the CPU 41 on the liquid crystal display 25 and of the effect display of the selected entries will be explained with reference to FIG. 8. FIG. 8 is a diagram that shows an example of the menu display (selection acceptance) that is displayed on the liquid crystal display 25 by the CPU 41 of the navigation apparatus 2 according to the second embodiment and of the effect display of the selected entries.

As shown at the left end portion of FIG 8, first, the CPU 41 reads the version information of the updated map information from the navigation map information 37A, and displays "map update complete for version xx" on the liquid crystal display 25. In addition, the CPU 41 displays a newest function merit button 70, which directs the display of the content that has been improved by updating the map information of the navigation map information 37A, on the left side of the lower edge portion of the liquid crystal display 25. In addition, the CPU 41 displays an OK button 71, which directs the cancellation of the display of the content that has been improved by updating the map information of the navigation map information 37A on the right side of this newest function merit button 70.

In addition, as shown in the middle portion of FIG. 8, in the case in which the newest function merit button 70 has been pressed via the touch panel or the operation button, the CPU 41 arranges vertically and displays, on the liquid crystal display 25, a time reduction merit button 72, which directs the display of the improved content of the "required time (min)" entry, a distance reduction merit button 73, which directs the display of the "display data" that shows the improved content of the "travel distance (km)" entry, and a fuel savings merit button 74, which directs the display of the "display data" that shows the improved content of the "fuel consumption (1)" entry. In addition, the CPU 41 displays "time reduction case" on the right side of the time reduction merit button 72. Additionally, the CPU 41 displays "distance reduction case" on the right side of the distance reduction merit button 73. Furthermore, the CPU 41 displays "fuel savings case" on the right side of the fuel savings merit button 74.
Note that in the case in which the OK button 71 has been pressed via the touch panel or the operation button, the CPU 41 cancels the display of the content that has been improved by the updating of the navigation map information 37A.

Next, as shown in the upper right portion of FIG. 8, in the case in which the time reduction merit button 72 has been pressed via the touch panel or the operation button, the CPU 41 compares the sets of data corresponding to the "required time (min)" entry of the "post-update map retrieval" and the "pre-update map retrieval" in the travel information comparison table 52 that is contained in the travel history DB 38. Next, the CPU 41 selects three cases starting from the superior cases in order of most improved effect before and after updating the navigation map information 37A, and displays the results on the liquid crystal display 25. Thus, among the routes that have been traveled in the past, three cases are displayed starting from the superior cases in order of the most time reduction effect that is due to the updating of the navigation map information 37A is displayed.
In addition, as shown in the middle portion of FIG. 8, in the case in which the distance reduction merit button 73 has been pressed via the touch panel or the operation button, the CPU 41 compares the sets of data corresponding to the "travel distance (km)" entry of the "post-update map retrieval" and the "pre-update map retrieval" in the travel information comparison table 52 that is contained in the travel history DB 38. Next, the CPU 41 selects three cases starting from the superior cases in order of most improved effect before and after updating the navigation map information 37A, and displays the results on the liquid crystal display 25. Thus, among the routes that have been traveled in the past, three cases are displayed starting from the superior cases in order of the most distance reduction effect that is due to the updating of the navigation map information 37A is displayed.

Furthermore, as shown in the lower right portion of FIG 8, in the case in which the fuel savings merit button 74 has been pressed via the touch panel or the operation button, the CPU 41 compares the sets of data corresponding to the "fuel consumption (1)" entry of the "post-update map retrieval" and the "pre-update map retrieval" in the travel information comparison table 52 that is contained in the travel history DB 38. Next, the CPU 41 selects three cases starting from the superior cases in order of the most improved effect before and after updating the navigation map information 37A, and displays the results on the liquid crystal display 25. Thus, among the routes that have been traveled in the past, three cases are displayed starting from the superior cases in order of the most fuel savings effect that is due to the updating of the navigation map information 37A is displayed.
In addition, the CPU 41 displays a return button 76, which directs returning to the previous screen display, at the lower edge portion of the liquid crystal display 25. In addition, the CPU 41 displays an OK button 77, which directs the cancellation of the display of the content that has been improved by the updating of the navigation map information 37A on the right side of the return button 76. Thus, in the case in which the return button 76 has been pressed via the touch panel or the operation button, the CPU carries out the display of the previous screen display. In addition, in the case in which the OK button 77 has been pressed via the touch panel or the operation button, the CPU 41 cancels the display of the content that has been improved by the updating of the navigation map information 37A.

As has been explained above in detail, in the navigation system 1 according to the second embodiment, in the case in which the navigation map information 37A has been updated, the CPU 41 of the navigation apparatus 2 reads in sequence the "date" and the "departure point → destination point" in each of the sets of the travel history data that have been contained in the travel history data table 51, which is stored in the travel history DB 38, and based on the day of the week of the "date", the season, and the starting time, retrieves the routes that correspond to the "departure point → destination point" based on the map information of the updated navigation map information 37A, the present condition traffic information 36A, the statistical traffic information 36B, and the like, and stores the route information that is related to each of these retrieved routes in the RAM 42 (S211 to S213). Then, based on the route information that is related to each of these retrieved routes, the CPU 41 calculates the "required time (min)", the "travel distance (km)", and the "fuel consumption (1)" for each of the routes, and stores the results in the RAM 42 as the predicted travel information. Subsequently, the CPU 41 produces a travel information comparison table 52 based on the travel history data of the navigation apparatus 2 and each of the sets of the predicted travel information that are stored in the RAM 42. Next, the CPU 41 displays on the liquid crystal display 25 the menu display (selection acceptance) that accepts the display of the content that has been improved by updating the map information of the navigation map information 37A. Subsequently, in the case in which an entry is selected from the menu display, each of the sets of data that correspond to the selected entries of the "post-update map retrieval" and the "pre-update map retrieval" in the travel information comparison table 52 are compared. In addition, the CPU 41 selects several cases (for example, 3 cases to 5 cases) starting from the superior cases in order of the most improved effect, before and after the updating of the navigation map information 37A, and displays the results on the liquid crystal display 25 (S214 to S217).

Thus, in the case in which the map information of the navigation map information 37A of the navigation apparatus 2 has been updated, for a "date", a "departure point" and a "destination point" of each set of the travel history data that has been stored in the travel history data table 51, the CPU 41 can display, on the liquid crystal display 25, the comparison results for each of the routes that have been retrieved based on the navigation map information 37A before being updated and each of the routes that have been retrieved based on the updated navigation map information 37A, the present condition traffic information 36A, and the statistical traffic information 36B and the like for the entries that have been selected from among the "required time (min)", the "travel distance (km)", and the "fuel consumption (1)".

In addition, the CPU 41 displays on the liquid crystal display 25 each of the several cases starting from the superior cases (improved values) in order of the most improved effect for the selected "required time (min)", the "travel distance (km)", and the "fuel consumption (1)" entries. Thus, for the entries for which the comparison results for the actually used routes are selected, several cases each can be easily confirmed, the user can easily recognize the improved effect that is due to the updating of the navigation map information 37A, and can easily recognize the benefits that are due to this updated navigation map information 37A.

Note that the present invention is not limited to the first embodiment and the second embodiment, and that naturally various improvements and modifications are possible within a range that does not depart from the spirit of the invention. Examples are provided below.

(A) For example, in S 116 described above, the CPU 11 produces display data that shows the improved values having the greatest improved effect for each of the "required time (min)", the "travel distance (km)", and the "fuel consumption (1)" entries, and stores the display data in the RAM 12. Subsequently, the CPU 11 may read the navigation apparatus identification ID that corresponds to the travel history data that has been received from the travel history DB 18, may read the "display data" from the RAM 12, and may transmit the "display data" along with the newest version of the version data of the update map information 14A to the navigation apparatus 2 that corresponds to the navigation apparatus identification ID.
In addition, in S15, in the case in which the CPU 41 has been directed to display the improved content via a menu display that is displayed on the liquid crystal display 25 via the operation unit 24, the CPU 41 may read the "display data" that shows the improved values having the highest improvement effect for each of the "required time (min)", the "travel distance (km)", and the "fuel consumption (1)" entry, and display the results on the liquid crystal display 25.
Thus, for the route that will actually be used, the user can recognize the route having the greatest improved values due to the map update, and can easily recognize the benefits for the case in which the navigation map information 37A has been updated.

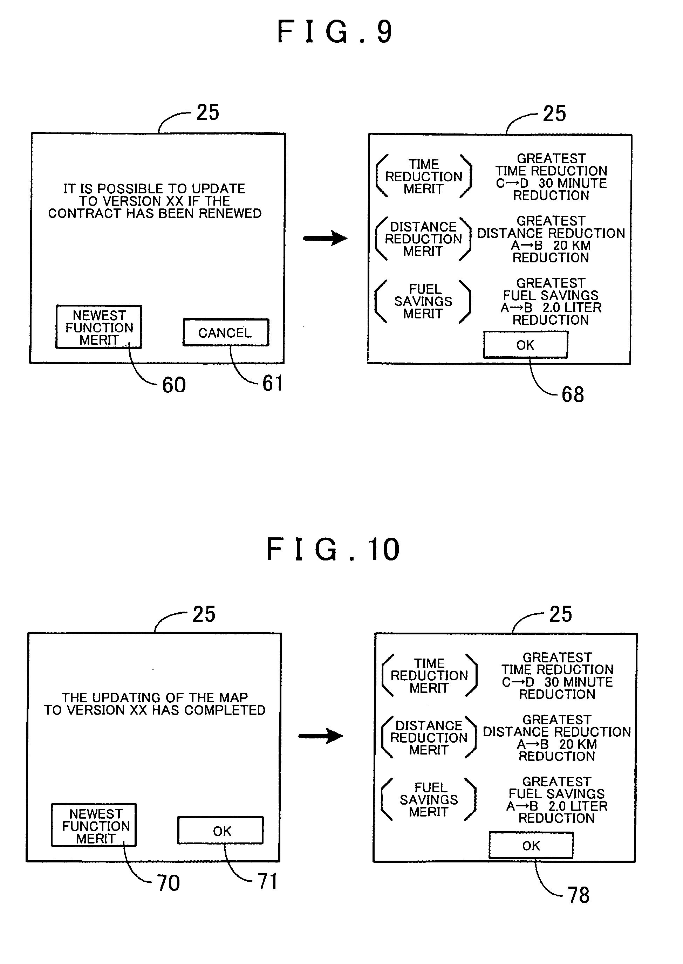

Here, an example of the menu display (selection acceptance) that the CPU 41 displays on the liquid crystal display 25 and the effect display of the selected entries will be explained with reference to FIG. 9. FIG. 9 is a diagram that shows an example of the menu display (selection acceptance) that the CPU 41 of the navigation apparatus 2 according to another embodiment displays on the liquid crystal display 25 and the effect display of the selected entries.
As shown on the left side of FIG 9, first, the CPU 41 reads the newest version of the version information (for example, the newest version is "version xx") of the update map information 14A from the RAM 42, and displays "when carrying out map updating (contract update), the maps can be updated to version xx" on the liquid crystal display 25. In addition, the CPU 41 displays the newest function merit button 60, which directs the display of the improved content in the case in which the navigation map information 37A has been updated to the newest version of the map information, on the left side of the lower edge of the liquid crystal display 25. In addition, the CPU 41 displays the cancel button 61, which directs the cancellation of the display of the improved content in the case in which the navigation map information 37A has been updated, on the right side of this newest function merit button 60.

In addition, as shown in the right side of FIG. 9, in the case in which the newest function merit button 60 has been pressed via the touch panel or the operation button, the CPU 41 displays on the liquid crystal display 25 the most improved "time reduction merit" of the "required time (min)" entry, the most improved "distance reduction merit" of the "travel distance (km)" entry, and the most improved "fuel savings merit" of the "fuel consumption (1)" entry. In addition, the CPU 41 displays an OK button 68, which directs the cancellation of the display of the improved content in the case in which the navigation map information 37A has been updated, at the lower edge portion of the liquid crystal display 25.

(B) In addition, for example, in S216 to S217 described above, in the case in which the CPU 41 has been directed to display the improved content via the menu display that is displayed on the liquid crystal display 25 via the operation unit 24, for each of the "required time (min)", the "travel distance (km)", and the "fuel consumption (1)" entries, the CPU 41 may select the entries that have the improved values with the greatest improvement effect before and after the updating of the navigation map information 37A, and display these on the liquid crystal display 25.
Thus, for the route that will actually be used, the user can recognize the route having the greatest improved value among the improvement values that have been obtained due to the updating of the navigation map information 37A, and can easily recognize the benefits of the improved navigation map information 37A.

Here, an example of the menu display (selection acceptance) that the CPU 41 displays on the liquid crystal display 25 and the effect display of the selected entry will be explained with reference to FIG. 10. FIG. 10 is a diagram that shows an example of the menu display (selection acceptance) that the CPU 41 of the navigation apparatus 2 according to still another embodiment displays on the liquid crystal display 25 and the effect display of the selected entry.
As shown in the left side of FIG. 10, first the CPU 41 reads the version information of the updated map information from the navigation map information 37A, and displays "updating of the map to version xx has completed" on the liquid crystal display 25. Then, the CPU 41 displays the newest function merit button 70, which directs the display of the content that has been improved by updating the map information of the navigation map information 37A, at the left side of the lower edge portion of the liquid crystal display 25. In addition, the CPU 41 displays the OK button 71, which directs the cancellation of the display of the content that has been improved by updating the map information of the navigation map information 37A, on the right side of the newest function merit button 70.

In addition, as shown on the right side of FIG. 10, in the case in which the newest function merit button 70 has been pressed via the touch panel or the operation button, the CPU 41 displays on the liquid crystal display 25 the most improved "time reduction merit" for the "required time (min)" entry, the "distance reduction merit" for the most improved "travel distance (km)" entry, and the most improved "fuel savings merit" for the "fuel consumption (1)" entry. In addition, the CPU 41 displays an OK button 78, which directs the cancellation of the display of the content that has been improved by the updating of the navigation map information 37A on the lower edge portion of the liquid crystal display 25.

(C) In addition, in the processing in S 113 described above, the "date" and the "departure point → destination point" may be read in sequence in the travel history data that is stored in the travel history data table 51, routes that are frequently traveled (for example, routes that have been traveled 5 times or more) may be retrieved based on the newest version of the map information that is contained in the update map information 14A, the present condition travel information 16A, the statistical travel information 16B and the like, and the route information related to each of the retrieved routes may be obtained.
In addition, in S213 described above, the "date" and the "departure point → destination point" may be read in sequence in the travel history data that has been stored in the RAM 42, routes that are frequently traveled (for example, routes that have been traveled 5 times or more) may be retrieved based on the map information of the updated navigation map information 37A, the present condition traffic information 36A, the statistical travel information 36B and the like, and the route information related to each of the retrieved routes may be obtained.
Thus, for routes that are frequently used, the user can easily recognize the benefits that are obtained by the updating of the navigation map information 37A and the benefits that are obtained by the updated navigation map information 37A.

(D) In addition, in the first embodiment, the CPU 41 of the navigation apparatus 2 may send the travel history data that has been contained in the travel history DB 38 along with the navigation apparatus identification ID to the information distribution center 3 when a destination point is reached, every 24 hours, every week or the like, not just when an update request command that directs the updating of the navigation map information 37A has been input. In contrast, the CPU 11 of the information distribution center 3 may contain the travel history data and the navigation apparatus identification ID that have been received in sequence in the travel history DB 18 classified by navigation apparatus identification ID.
Thus, in step 12 described above, the CPU 41 can reduce the amount of data that is transmitted to the information distribution center 3.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A map information updating system that updates map information that has been stored in a navigation apparatus (2), comprising:
a set location storing unit (22) that stores combinations of a plurality of departure points and destination points that have been set in the past;
a map information storing unit (14) that stores the map information;
a post-update map information storing unit (18) that stores post-update map information, which is the updated map information;
a comparison unit (11) that compares routes that have been retrieved by using the map information and routes that have been retrieved by using the post-update map information, for the combinations of the plurality of departure points and destination points; and
a notification unit (25) that provides notification about comparison results that have been obtained by the comparison unit (11).

2. The map information updating system according to claim 1, wherein the comparison unit (11) calculates improved values, due to the routes that have been retrieved by using the post-update map information, for the routes that have been retrieved by using the map information.

3. The map information updating system according to claim 2, wherein the notification unit (11) provides notification about routes having the largest improved values, due to the routes that have been retrieved by using the post-update map information, for the routes that have been retrieved by using the map information.

4. The map information updating system according to any one of claims 1 to 3, further comprising:
an update determination unit (41) that determines whether the map information has been updated, wherein
the notification unit (25) provides notification about the comparison results when the update determination unit (41) determines that the map information has been updated.

5. The map information updating system according to any one of claims 1 to 4, further comprising:
an update request determination unit (11) that determines whether there has been an update request for the map information, wherein
the notification unit (25) provides notification about the comparison results when the update request determination unit (11) determines that there has been an update request for the map information.
